# EUROPEAN PATENT SPECIFICATION

(11) **EP 1 564 240 B1**
(45) Date of publication and mention of the grant of the patent: **15.10.2008**
(21) Application number: 04075423.6
(22) Date of filing: 12.02.2004
(51) Int. Cl.: C08J 5/24, C08G 18/68

(54) **Fibre-reinforced two-component resin system based on vinyl ester**
Faserverstärktes zweikomponenten-Harzsystem auf Basis Vinylester
Résine à deux composants renforcée avec des fibres à base de vinyl ester

(43) Date of publication of application: 17.08.2005
(73) Proprietor: DSM IP Assets B.V., 6411 TE Heerlen (NL)
(72) Inventor: Dijkink, Peter, 7707 RG Balkbrug (NL); Verleg, Ronald Leonardus, 1382 CV Weesp (NL); Drogt, Berend Albert, 8200 Schaffhausen (CH); Klumperman, Geert Jan Albert, 7447 AG Hellendoorn (NL)
(74) Representative: Verhaegen, Ilse Maria M.

(56) References cited:
- FR-A- 2 730 237
- US-A- 4 366 109
- US-A1- 2003 220 035

## Description

The present invention relates to a fibre-reinforcement material and a peroxide composition containing two-component resin system, comprising at least a first resin component (A), having a low acid number, containing one or more ethylenically unsaturated groups and one or more isocyanate-reactive groups, and optionally also containing at least one monomer reactive in said first resin component, and a second resin component (B), consisting of a polyisocyanate compound having an isocyanate functionality of at least 1,75. As used herein, the value of the isocyanate functionality (also referred to as NCO-functionality) can be determined from the molecular weight and NCO-content as measured according to ASTM D 5155-91 A. Such resin systems are intended to be used in as many standard processing techniques as can be envisaged, for instance, in all kinds of open mould techniques and closed mould techniques, hand-lay-up, spray-up, pultrusion, vacuum injection, sheet moulding, filament-winding processing techniques. All such processing techniques are well known to the skilled man.

As used herein the term peroxide composition relates, depending of the processing technique to be used, either a peroxide compound, or mixture of peroxide compounds, as such; or it refers to such peroxide compound or mixture of peroxide compounds in combination with, again depending of the processing technique to be used, a promoter and/or an inhibitor and/or an accelerator for the peroxide reaction. The peroxide composition does not necessarily to be present in either the first or second component (A) or (B) of the resin system, but also may be added thereto - as an additional component - shortly before or during the processing of the resin system. In the context of this application, in each of such embodiments the resin system is to be considered to be a two-component resin system. The peroxide composition hereinafter also will be referred to as (C), and the fibre-reinforcement material as (D).

Further, as used in the context of this application, a low acid number is considered to be an acid number of 20 or lower, measured in mg of potassium hydroxide per g (mg KOH/g) according to DIN 53402. The term isocyanate-reactive groups means that such groups, for instance hydroxyl groups or amine groups, are available in the component for reacting with isocyanate functions. Determination of the hydroxyl number (OH-number) - in case of using components with hydroxyl groups as compounds with isocyanate-reactive group - is done according to DIN 53240. The term isocyanate functionality (or alternatively NCO-functionality) represents the average number of isocyanate groups per molecule of the polyisocyanate compound (or the mixture of such polyisocyanate compounds). The isocyanate functionality, as used herein, is a number as can be determined from the molecular weight and NCO-content as measured according to ASTM D 5155-91 A.

In general, two-component resin systems are relatively difficult to handle in the processing techniques mentioned before (and especially in pultrusion, vacuum injection and filament-winding processing techniques), particularly because the processing time after mixing of the components of the resin system tends to be quite short due to the fact that rapid urethane thickening of the resin system occurs during processing. This processing time after mixing of the components in the field of resin technology is also referred to as the pot-life of the resin system. In order to avoid such problems of short processing times, it has been attempted in the prior art to shift over to so-called pre-preg methods, wherein first a pre-preg is made and stored, to be used in a further processing (moulding) step at elevated temperature when producing the desired moulded articles.

For instance, EP-B-0726283 discloses polyester-polyurethane modified resins, prepared by reaction from a fibre-reinforcement material and a peroxide composition containing two-component resin system comprising as a first component a low acid number unsaturated polyester resin also containing a hydroxylated (alkyl)acrylate, and as a second component a polyisocyanate. The polyisocyanate containing component thereof has an NCO-functionality of 2-3, and the other component contains an unsaturated polyester having hydroxyl groups, whereby it is required that the molar ratio of NCO functions in the one component versus the OH functions in the other component is in the range of from 0,7 to 1,1. Thus, EP-B-0726283 teaches the preparation of fibre-reinforced pre-preg materials, already thickened during the reaction step in the formation of the polyester-polyurethane modified resins. Other references relating to pre-preg methods the upper limit of the molar ratio of NCO functions in the one component versus the isocyanate-reactive functions, often OH functions, in the other component is often even higher than 1,1, even up to, for instance 10,0 (as is being disclosed in US-5998510).

Due to the relatively thickened state of the pre-pregs formed, handling of these products, however, still remains rather difficult, although mechanical properties, for instance tensile strength, flexural strength, flexural modulus, interlaminar shear strength (ILSS) and fatigue resistance of the mouldings ultimately prepared from such pre-pregs are good. Accordingly, there existed a need for providing resin systems having improved properties for being handled in moulding processes, in particular in pultrusion, vacuum injection and filament-winding processing techniques.

The present inventors now have found that the problems of the prior art, especially as to processability and processing time of resin systems for use in the broad range of processing techniques as mentioned before (and especially in pultrusion, vacuum injection and filament-winding processing techniques), can be overcome, while still resulting in excellent mechanical properties of the mouldings prepared from such resin systems. They now have provided fibre-reinforcement material and a peroxide composition containing two-component resin systems, comprising at least a first resin component (A), having a low acid number, containing one or more ethylenically unsaturated groups and one or more isocyanate-reactive groups, and optionally also containing at least one monomer reactive in said first resin component, and a second resin component (B), consisting of a polyisocyanate compound having an isocyanate functionality of at least 1,75,
wherein
■ the first and second resin component (A) and (B) are present in unreacted form,
■ whereby the first resin component (A) is selected from the group of resin components having one or more ethylenically unsaturated groups and one or more isocyanate-reactive groups, which components is a vinyl ester resin (A1a), optionally dissolved in a monomer (A2) containing one or more ethylenically unsaturated groups and/or one or more isocyanate-reactive groups, and
■ the fibre-reinforcement material is provided with one or more isocyanate-reactive sites, and
■ the molar ratio of isocyanate groups in the second resin component (B) versus the isocyanate-reactive groups in the first resin component (A) is in the range of from 0,01 to 0,55.

In such way two-component resin systems are provided that very suitably can be used in all of the aforementioned processing techniques, particularly in pultrusion, vacuum injection and filament-winding processing techniques. These processing techniques are well known to the skilled man. For instance, see a very convenient recent concise description of processing techniques in Unsaturated Polyester Resins, Polymers with unlimited possibilities, J. H. Aurer, A. Kasper, 2003, Verlag Moderne Industrie, Landsberg/Lech, Germany.

The fact, that such excellent mechanical properties are achieved for products prepared from these two-component fibre-reinforcement material and a peroxide composition containing resin systems according the invention at such low molar ratio of isocyanate groups versus isocyanate-reactive groups, e.g. hydroxyl groups, of from 0,01 to 0,55, is most surprising and completely unexpected.

Hereinafter, the code (A1a), is being used for convenience in case - where specific embodiments of the invention relate to one or two of these categories of products - reference is made to one or two of the groups of vinyl ester resins, unsaturated polyester resins, respectively oligomers having one or more ethylenically unsaturated groups and one or more isocyanate-reactive groups. In case each of the products belonging to (A1a), as meant herein, can be applied, then the general code (A1) is being used for this part of resin component (A).

In particular, the present inventors have found, that said excellent mechanical properties not only can be observed in the objects prepared, but also when these objects are being exposed to quite severe conditions such as submerging in boiling water for many hours: in such cases mechanical properties remain at high level for much longer time than for products made from resin systems falling outside of those of the present invention. This presumably can be ascribed to the improved adhesion between fibre-reinforcement material and resin system achieved according to the invention.

With the state of the art resin compositions that do not comprise any free isocyanate groups containing compounds, i.e. generally in one-component resin systems, for instance unsaturated polyester and vinyl ester resins, it has been impossible to reach such mechanical properties without taking additional and cumbersome measures.

In contrast, in the invention according to the present patent application, the isocyanate groups present in the resin system are being reacted with the isocyanate-reactive sites of the fibre-reinforcement material (and, as is the case in a preferred embodiment thereof, also with the isocyanate-reactive sites of the fillers). As meant herein, the term "isocyanate-reactive sites" is intended to reflect that the fibre-reinforcement material (respectively, the filler) is either pre-treated with a sizing containing one or more isocyanate-reactive groups, or is treated in such other way that it is capable of reacting with isocyanate groups.

Comparison of the results of the examples and comparative examples in the experimental part of this patent application clearly shows that flexural strength and ILSS are very much improved in comparison to the situation where no (free) polyisocyanate component is present in the resin system. It can be seen, moreover, that thickening properties (and thus the pot-life of the resin system upon mixing of the components) are poor at higher NCO to OH ratios than 0,55.

It may also be noticed here, that US-A-5756600 discloses the preparation of certain urethane-modified epoxy vinyl ester resins, in which vinyl ester resins the chain is extended by means of an urethane reaction taking place in the reactor while preparing the resin system, i.e. well before using the resin system for the preparation of objects and the like. During said urethane reaction step, moreover, it may be necessary to add acid. The resin system of US-A-5756600 is, however, not to be considered a two-component resin system. In fact, it is a one-component resin system. In general, in the urethane reaction according to US-A-5756600, excess of hydroxyl functions is being used (i.e. the molar ratio of isocyanate groups versus isocyanate-reactive groups, e.g. hydroxyl groups, is well below 1, but generally not as low as from 0,01 to 0,55), and no free isocyanate will remain in the resin system after the urethane reaction and before its further handling.

The first resin component (A) of the two-component resin system according to the invention is selected from the group of resin components having one or more ethylenically unsaturated groups and one or more isocyanate-reactive groups, which component may be chosen from the group of vinyl ester resins (A1a), Optionally the component (A1a), is dissolved in a suitable monomer (A2) containing one or more ethylenically unsaturated groups and/or one or more isocyanate-reactive groups. Said monomer forms part of resin component (A). However, in case (A1a) is a solid resin, there is no need for dissolving it in a monomer (A2).

Suitable resin components (A1a), to be used in the first resin component (A) for the resin systems according to the invention can be selected from the broad groups of vinyl ester resinsas being described hereinafter in more detail.

Examples of suitable vinyl ester resins and their preparation (generally from reaction of epoxy compounds and monocarboxylic acids, or mixtures of any of these components) are well known to the skilled man. See, for instance, G. Pritchard (Ed.), Development in Reinforced Plastics 1 (1980), Applied Science Publishers Ltd., London, pp. 29-58.

In general these resins have a low acid number, usually of at most 10, as determined according to DIN 53402, and hydroxyl groups corresponding to an OH-number of at least 10, as determined according to DIN 53240. Very suitable resins from the group of vinyl ester resins are the ones having (i) a high OH-number, i.e. an OH-number in the range of from 100 to about 300, and (ii) an acid number equal to or lower than 5. An example thereof is Daron XP 45-A-2 from DSM Composite Resins, Schaffhausen, Switzerland.

As mentioned before, if the vinyl ester resins resins are solid resins, they may, according to the invention, suitably be applied in the first resin component (A) without the need of adding a reactive monomer component (A2). Examples of such suitable optional monomer components are being given elsewhere in this application. The vinyl ester resins and unsaturated polyester resins used in component (A), however, also suitably may be used in combination with a monomer (A2).

Examples of suitable monomer components A2 having one or more ethylenically unsaturated groups and/or one or more isocyanate-reactive groups also may be chosen from the group of hydroxylated (alkyl)acrylates, for instance hydroxylated acrylates or methacrylates, together referred to as (meth)acrylates. Examples of suitable hydroxyalkyl (meth) acrylates are hydroxypropyl methacrylate (HPMA), hydroxyethyl methacrylate (HEMA), hydroxyethyl acrylate, hydroxypropyl acrylate, polyoxyethylene(2) acrylate, polyoxyethylene(2) methacrylate, polyoxyethylene(3) acrylate, polyoxyethylene(3) methacrylate, polyoxypropylene(2) acrylate, polyoxypropylene(2) methacrylate, polyoxypropylene(3) acrylate, polyoxypropylene(3) methacrylate.

Examples of suitable monomers (A2) reactive with the resin (A1) are monomers capable of copolymerising, under certain conditions, with polyol polyesters to form a crosslinked structure, or are capable of reacting with ethylenic unsaturations in (A1). These monomers can be selected from the group of styrene, substituted styrenes such as vinyl toluene, t-butylstyrene, α-methylstyrene, chlorostyrene, dichlorostyrene, divinylbenzene, dibutylfumarate and maleate, diethylfumartate and maleate, dimethylfumarate and maleate, N-vinylpyrrolidone, allyl methacrylate, allyl acetate, diallyl succinate, N-vinylcarbazole, lower alkyl (C₁ to C₈) esters of (meth)acrylic acid, such as for instance methyl methacrylate (MMA), cyclic (meth)acrylates, such as those of cyclohexyl and benzyl, bicyclic (meth)acrylates, such as those of isobornyl, diallyl phthalate, diallyl maleate, diallyl fumarate, triallylcyanurate and acetate, vinyl crotonate and propionate, divinyl ether, conjugated dienes such as butadiene-1,3, isoprene, 1,3-pentadiene, 5-methylene-2-norbornene, cyclopentadiene, unsaturated nitriles such as (meth)acrylonitrile, as well as polyol (meth)acrylates such as the di- or tri-(meth)acrylates of ethylene glycol, propylene glycol, butanediols and hexanediols, neopentylglycol, cyclohexanediols, diethylene glycol or dipropylene glycol, trimethylolpropane, glycerol, pentaerythritol etc. and their mixtures at all ratios. The reactive monomer (A2) also very suitably may be selected from the group of hydroxyfunctional (meth)acrylates. In such case the monomeric hydroxyfunctional (meth)acrylates may be the same as the corresponding monomers for the hydroxyalkyl (meth)acrylates discussed for (A2). Examples of suitable hydroxyfunctional (meth)acrylates that may used as monomer (A2), or may be present therein if monomer (A2) is selected from the first mentioned group of monomers (A2), thus are hydroxypropyl methacrylate (HPMA), hydroxyethyl methacrylate (HEMA), hydroxyethyl acrylate, hydroxypropyl acrylate, polyoxyethylene(2) acrylate, polyoxyethylene(2) methacrylate, polyoxyethylene(3) acrylate, polyoxyethylene(3) methacrylate, polyoxypropylene(2) acrylate, polyoxypropylene(2) methacrylate, polyoxypropylene(3) acrylate, polyoxypropylene(3) methacrylate. Further, also all kinds of (liquid) glycols can suitably be used as the monomer (A2). Examples of such glycols are, for instance, 1,3-propanediol, 1,3-butanediol, 1,4-butanediol, 1,6-hexanediol, neopentyl glycol; mono-, di- or tri-propylene glycols; mono-, di- or tri-ethylene glycols; polyethylene glycols, for instance in the range of from PEG200 to PEG6000; polyalkylene glycols; and glycerol. As meant herein, glycols need not be restricted to dihydric aliphatic alcohols, but also may contain more than two hydroxyl groups. Of course, also mixtures of suitable monomers (A2) may be applied.

Accordingly, the resins (A1) have an OH-number, as determined by the method indicated above, in the range of from 10 to 300, and an acid number, as determined by the method indicated above, in the range of from 0 to 15.

Most preferably the first resin component (A) consists of a combination of a resin (A1a) and a monomer (A2), and the monomer (A2) is selected from the group of styrene, methyl methacrylate (MMA), hydroxypropyl methacrylate (HPMA) and hydroxyethyl methacrylate (HEMA), or a mixture thereof.

It goes without saying, that the hydroxyl groups present in the hydroxyfunctional (meth)acrylate, if present in the resin system, are to be taken into account when determining the OH-number of the first component (A).

In dependence of the amounts and types of (A1a), and (A2) used in the resin system according to the invention, the skilled man will be able to find, within the range of the molar ratio of the isocyanate groups in the second component (B) versus the hydroxyl groups in the first component (A) of from 0,01 to 0,55, the optimum amount of isocyanate component (B) as is to be used.

The weight ratio of the resin (A1a) and the reactive monomer (A2) in the first component (A) may be varied between wide ranges, ranging from 0% (wt.) of (A1a) to 100% (wt.) of (A1a), as the case may be, the sum of weight percentages of (A1a) and (A2) adding up to 100%. Because component (A) may consist completely of a vinyl ester resin or a hydroxyalkyl (meth)acrylate, the presence of (A2) is referred to as being optional.

Accordingly, for the two-component resin systems of the invention, two main embodiments can be distinguished, namely:
(a) those two-component resin systems wherein the first component (A) is, for 100% (wt.) based on a solid resin (A1a). This type of two-component resin systems also can be referred to as a so-called pre-preg system;
(b) those two-component resin systems wherein the first component (A) is based on a resin (A1a) and also contains a reactive monomer (A2) chosen from the group of monomers (A2), listed above, for instance, styrene and/or a hydroxy (meth)acrylate.

Each of such embodiments may have specific advantages in specific processing techniques. Advantages of pot-life, for instance, are most pronounced for embodiments (b), which contain monomeric solvents.

Most suitably, when the first component (A) consists of resin (A1a) and/or monomer (A2), the weight percentage of (A1) - that is resin (A1a) - is in the range of from 40 to 100% (wt.), preferably of from 40 to 80% (wt.), relative to the total weight of the first component (A) of the resin system, i.e. the total weight of (A1a) and (A2). This total weight of the first component (A) is calculated without taking into account the weight of the fibre-reinforcement material, the weight of the peroxide composition, the weight of any optional fillers, etc. The peroxide composition and the fibre-reinforcement material hereinafter, respectively and for convenience, are also referred to as (C), respectively (D). Using similar calculations, the weight percentage of reactive monomer (A2) is in the range of from 0 to 60% (wt.) relative to the total weight of the first component (A) of the resin system. The sum of the weight percentages for components (A1a), and (A2) adds up to 100%.

The total weight of the resin system as used in this patent application is the sum of (i) the weight of the first component (A) (i.e. the weight of (A1) and the optional (A2)), and (ii) the weight of the second component (B), and (iii) the weight of - if present in either first or second component (A) or (B), depending of the intended processing technique to be used - the peroxide composition (C), and (iv) the weight of the fibre-reinforcement material (D). For the avoidance of doubt it is mentioned here that the weight of fillers and /or any additives other than the peroxide composition (hereinafter together referred to as (E)), is not taken into account when determining the total weight of the resin system. It is most convenient that the weight percentage of fibre-reinforcement material (D), is calculated as a percentage of the total weight of (A) + (B) + (C) + (D).

As polyisocyanate compounds that suitably can be used according to the present invention in the second component (B), compounds (or mixtures of compounds), from the following group of monomeric or polymeric, aliphatic, cycloaliphatic and aromatic diisocyanates, triisocyanates, and isocyanates having up to about 5 isocyanate groups per mol may be chosen. The only requirement is that the isocyanate is free of any groups which interfere in the reaction of an isocyanate group with a hydroxyl group. Such aliphatic diisocyanates include, for example, methylene-bis-(4-cyclohexyl isocyanate), hexamethylene diisocyanate, trimethylhexyl diisocyanate, cyclohexyl diisocyanate, dicyclohexyl diisocyanate, and isophorone diisocyanate (IPDI). Similarly, compounds with higher isocyanate functionality may be used, for example 1,3,5-cyclohexane triisocyanate, etc. Aromatic diisocyanates include, for instance, toluene diisocyanate (TDI), cumene-2,4-diisocyanate, 4,4'-diphenylmethane diisocyanate (MDI), p-phenylene diisocyanate, dichlorodiphenylmethane diisocyanate, dimethyldiphenylmethane diisocyanate, dibenzyl diisocyanate, diphenylether-2,4'-diisocyanate, 1,5-naphthalene diisocyanate, 4-methoxy-1,3-phenylene diisocyanate, 4-chloro-1,3-phenylene diisocyanate, stilbene-2,4-diisocyanate, 1,4-anthracene diisocyanate, and the like. For example, also diisocyanates of the formula OCN-[PH]-X-[PH]-NCO, wherein [PH] is an aromatic ring and X may be a valence bond, an alkylene radical of 1 to 5 carbon atoms, or an oxygen, sulfur, sulfoxide or sulfone bridge. When toluene diisocyanate is employed it includes a mixture of 2,4- and 2,6-isomers. Similarly, also aromatic compounds with higher isocyanate functionality may be used, for example 1-methylbenzene-2,4,6-triisocyanate, biphenyl-2,4,4'-triisocyanate, 2,4,4'-triisocyanatodiphenyl ether, etc. Polyfunctional isocyanates such as polymethylene polyphenyl isocyanate are sold commercially under the trademarks of, for instance, Lupranate M20R or Lupranate MIS of BASF. Also carbodiimide-modified diisocyanates and solvent-free urethane-modified diphenylmethane diisocyanates may be used.

These compounds (or mixtures of compounds) generally can be characterized by their isocyanate functionality. This is figure that represents the average number of (reactive) isocyanate groups present in the polyisocyanate per weight corresponding to the average molecular weight of said isocyanate compound. Especially preferred are, usually polymeric, compounds and mixtures of compounds from the group of toluene diisocyanate (TDI), isophorone diisocyanate (IPDI), and 4,4'-diphenylmethane diisocyanate (MDI). It will be evident, that the skilled man, when selecting a polyisocyanate compound for being used in the context of the present invention, also will take into account relevant aspects as to toxicity, volatility, etc. of the compounds used, and of the reactivity of the isocyanate groups therein. When using relatively volatile isocyanate compounds processing techniques in closed systems are being preferred. Measures to be taken when handling such compounds are well known to the skilled man. Preferably, the polyisocyanate in the second component (B) has an isocyanate functionality in the range of 1,85 to 3,0, and preferably in the range of 1,9 to 2,8. Also for this second component (B) the isocyanate functionality is determined from the molecular weight and NCO-content as measured according to ASTM D 5155-91 A. Most preferred it is 4,4'-diphenylmethane diisocyanate (MDI).

According to the present invention, the ratio of isocyanate groups in the second component (B) versus the isocyanate-reactive groups, e.g. hydroxyl groups, in the first component (A) should be within the range of from 0,01 to 0,55. Preferably this ratio should be in the range of 0,02 to 0,50, and more preferably in the range of 0,04 to 0,40.

As mentioned above, the peroxide composition (C) used in the context of the present invention is, depending of the processing technique to be used, either a peroxide compound, or mixture of peroxide compounds, as such; or it refers to such peroxide compound or mixture of peroxide compounds in combination with, again depending of the processing technique to be used, a promoter and/or an inhibitor and/or an accelerator for the peroxide reaction. The peroxide composition does not necessarily to be present in either the first or second component (A) or (B) of the resin system, but also may be added thereto - as an additional component - shortly before or during the processing of the resin system. In the context of this application, in each of such embodiments the resin system is to be considered to be a two-component resin system. The specific choice of peroxide composition to be used will generally most strongly depend on the processing technique to be used. Guidance for the selection of peroxide compositions can be found, for instance, in the aforementioned description of processing techniques in Unsaturated Polyester Resins, Polymers with unlimited possibilities, J. H. Aurer, A. Kasper, 2003, Verlag Moderne Industrie, Landsberg/Lech, Germany. For example, in vacuum injection processing, a process usually taking place at ambient temperature, combinations of benzoyl peroxide and amine compounds may be applied, and in pultrusion processing peroxide compounds having a decomposition temperature of 40°C or higher are applied. Examples of the latter group of peroxide compounds are t-butyl perbenzoate, and bis-(4-t-butylcyclohexyl) peroxydicarbonate, and mixtures thereof.

The amount of peroxide composition to be used in the resin systems according to the present invention is usually no more than 6% (wt.), preferably of from 0,2 to 2,0% (wt.) as calculated as a percentage of the total weight of the first component (A) of the resin system, i.e. the weight of (A1) and the optional (A2).

The fibre-reinforcement material (D) may be selected from all kinds of fibrous materials that are usually used in the field of unsaturated polyester resin technology. The fibre-reinforcement material may be present in the form of continuous fibres, chopped fibres, mats (of woven rovings), etc. depending on the processing technique to be used in the further handling of the resin system. Very good results are obtained according to the invention when using glass or carbon fibre materials. Carbon and glass fibre materials are therefore most preferred in the context of this invention.

In general, and preferably, the glass and carbon fibrous materials already have been provided (in the production process of such fibrous materials) with isocyanate-reactive sites. It is, of course, also possible that the isocyanate-reactive sites are applied to the fibrous material shortly before the said material is introduced into the resin system according to the invention. As already indicated before, the term "isocyanate-reactive sites" reflects that a certain material, for instance the fibre-reinforcement material, is either pre-treated with a sizing containing one or more isocyanate-reactive groups, or is treated in such other way that the it is capable of reacting with isocyanate groups. The latter, for instance, can be the case for carbon fibres that have been treated by oxidation of their surface.

The resin systems according to the invention may also, in addition, contain fillers as are usually applied in the field of unsaturated vinyl esters and vinyl ester urethanes. For instance, fillers selected from the group of calcium carbonate, magnesium carbonate, aluminium trihydrate, calcium sulphate, metal borates, quartz, feldspars, carbon black, clay, kaolinite, bentonite, beidellite, saponite, diatomaceous earth, iron oxide, calcium oxide, lithopone, mica, silica, novaculite silica, other silaceous materials, titanium oxide, colored pigments, etc. may be used. Preferably, at least part of the optionally used fillers is also provided with isocyanate-reactive sites. This ensures even better adhesion between all materials present in the resin system, and improves the mechanical properties of the products prepared from the resin systems even more.

The amount of fibre-reinforcement material used in the resin systems according to the present invention may vary within a wide range, generally of from 5 to 90% (wt.) as calculated relative to the total weight of the resin system, i.e. of the total weight of first resin component (A), second resin component (B), peroxide composition (C), and fibre-reinforcement material (D). In resin systems where also filler material is being used, as is optionally the case, the amount of fibre-reinforcement material can, within the said range of from 5 to 90% (wt.), be lower, the more so, if higher amounts of filler material are being used.

Further, the resin composition according to the invention may contain suitable amounts of thermoplastic polymer preferably dissolved in an ethylenically unsaturated monomer, and preferably in the form of a 30-45 wt.% solution, before being added to the resin composition.

The thermoplastic polymer can be chosen from the group of thermoplastic polymers and copolymers (or mixtures thereof) customarily used as shrink-resistant additives in moulding compounds. Suitable examples are polyvinyl acetate, polyethylene vinyl acetate, polystyrene, polyacrylates, such as for instance polymethyl methacrylate, saturated polyesters or urethane-modified saturated polyesters, polyethylene, polyurethane, rubbers such as for instance styrene-butadiene block copolymers, styrene-butadiene rubbers, butadiene homopolymers, mixtures of butadiene homopolymers and butadiene-acrylonitrile copolymers, and the like.

In a number of cases it is also possible to use one or more of the above-mentioned polymers in carboxylated form, for instance as a copolymer with an ethylenically unsaturated carboxylic acid or a corresponding anhydride.

Thermoplastic polymers that are particularly suitable are polyvinyl acetate homopolymers or polymethyl methacrylate. The moulded articles obtained when using these thermoplastic polymers give the best results.

Examples of ethylenically unsaturated monomers in which the thermoplastic polymer may optionally be dissolved, as well as of the ethylenically unsaturated monomers that can be used as component (A) in compositions according to the invention, include vinyl esters, vinyl ethers, aromatic vinyl compounds, vinyl nitriles, acrylates and methacrylates. More in particular, examples are styrene, α-methylstyrene, p-methylstyrene, vinyl toluene (a mixture of ortho-, meta- and para-vinyl toluene) and methyl, ethyl, or propyl acrylate or methacrylate. Mixtures of such monomers are also suitable. Particularly suitable are aromatic vinyl compounds, such as for instance styrene.

In addition to the aforementioned components present in the resin composition, also other compounds may - and generally will -be present, as are well known to the skilled man. Other components that may be present are, for instance, inhibitors - for inhibiting or lowering the radical curing - such as chinones and hydrochinones; metal salts, for instance salts of cobalt, potassium, calcium or vanadium and the like, or amines, as tend to be used for accelerating the curing reaction; additional radical-forming initiators, including photo-initiators; accelerators and/or catalysts influencing the urethane reaction such as tin compounds, e.g. dibutyl tin laurate.

All of such additional components will be present, in dependence of the type of components and the processing technique used, in one (of both) of the components A and B, and/or will be added as a separate component (F) (or will be present in the peroxide composition (C)). The skilled man can, on the basis of his experience in this field, easily determine in which way such additional components best can be used in the resin system according to the invention. For example, accelerators and promotors like cobalt salts and amine compounds usually will be present in the first component (A); peroxides like dibenzoyl peroxides, peresters, ketone peroxides and diacyl peroxides can suitably be used in the isocyanate component (B). The skilled man will easily be able to select the most suitable types of accelerators, promotors and peroxides to be used, according to processing conditions like temperature and required curing characteristics.

In a very specific and preferred embodiment of the invention the resin compositions according to the invention also contain, in an amount of up to 5% (wt.) of the first component, (A), one ore more substances capable of scavenging moisture. By the presence of such water scavengers, for instance zeolites or other hygroscopic materials like alkali aluminosilicate (e.g. Baylith® UOP Lpowder of Grace, USA) or mono-oxazolidines (e.g. Incozol® 2 of Industrial Copolymers Ltd., United Kingdom) any water already present in the first component (A) as a result of the resin preparation or introduced into the system in any other way. Such water will be removed effectively from the resin system in such way that it cannot react with the isocyanate groups in the second component (B) with formation of carbon dioxide, which might cause foaming problems in the system during processing.

The resin systems according to the invention provide the skilled man with a very interesting range of resin products for being used in a broad range of processing techniques, but particularly suitable for being processed by pultrusion, vacuum injection and filament-winding techniques, from which materials can be obtained having excellent mechanical properties. Due to proper choice of the components used, and their relative amounts, in the resin system, the skilled man is offered - controllably as to the handling and processing time of the resin systems used - a wide series of resin systems for all of his applications.

Accordingly, the present invention also relates to the use of the two-component resin systems according to the invention in pultrusion or vacuum injection techniques. The invention further relates to products made by using two-component resin systems according to the invention in a pultrusion or vacuum injection process, and to resin systems, use thereof and products made therefrom as substantially described in the specification and examples.

The invention is now further illustrated with the help of some examples and comparative examples. However, the invention is by no means intended to be restricted to the embodiments specifically shown in the examples.

For the determination of mechanical properties the following methods were used:
- Interlaminar Shear Strength (ILSS) was determined according to DIN 14130;
- E-modulus was determined according to ISO 178;
- Flexural strength (FS) was determined according to ISO 178.

In all cases, except where the preparations of resin systems with a solid (A1a) or unsaturated polyester component were involved, test samples were prepared via pultrusion trials. In the other cases the test samples were prepared via a prepreg method. In the pre-preg method a solid resin, for instance a vinyl ester resin, is dissolved in a suitable monomer, for instance toluene, and a hot temperature curing t-butylperoxybenzoate (Trigonox C from AKZO Nobel Chemicals) is added. Lupranate M20R (polymeric methylene phenylene isocyanate from Elastogran) is added the vinyl ester solution, after which the mixture is applied on the fiber-reinforced woven roving fabrics. The impregnated fabrics are dried to 80°C to remove all toluene. After drying several layers of dry impregnated fabric are cured under pressure at elevated temperature (< 110°C).

The pot-life of a catalysed resin system is determined with the viscosity increase at ambient temperature. Therefore viscosity of a 1 kg mixture is followed in time using a Brookfield viscometer.

### Preparation of the resin mixture samples:

To the respective resin component (A) (as indicated in the tables) an amount of peroxide system composed of a mixture of bis-(4-t-butylcyclohexyl) peroxydicarbonate (Perkadox 16 from AKZO Nobel Chemicals, the Netherlands), (Trigonox 21 from AKZO Nobel Chemicals) and t-butylperoxybenzoate (Trigonox C, also from AKZO Nobel Chemicals, the Netherlands) in quantities of respectively 0,5 and 1,0% (wt.) calculated on the resin component (A). Furthermore, 1,0% (wt.) of Zelect UN (a release agent from Union Carbide, USA), calculated on the resin component A, was added. To this total mixture then 0,2% (wt.), calculated on this total mixture, was added of Byk A-515 (an air release agent from Byk, Germany). This mixture was stirred for 10 minutes, after which stirring component (B), as indicated in the tables, was added and the resulting mixture was stirred during 5 more minutes.

### Production of reinforced parts:

The resin mixture samples (as produced according to the above method and as indicated in the tables) were transferred to the impregnation bath of the pultrusion equipment. The fibre reinforcement material was pulled through the impregnation bath and introduced into the pultrusion mould with a dimension of 15 x 3 mm. The fibre content was fixed at 63 vol%. The mould contained two subsequent heating zones of 35 cm length each. The temperature of the first part was controlled between 135 and 150°C, the temperature of the second part between 150 and 170°C. The profiles were produced at a speed of 100 - 150 cm/min.

### Alternative production method of resin mixture samples and production of reinforced parts:

Apart from the abovementioned method for production of resin samples, also an alternative method was used (as indicated in the tables), as follows: To the resin component A 0,2% (wt.), calculated on the resin component (A), was added of diethyl aniline, while mixing well. To this mixture 5% (wt.), as calculated on resin component (A), was added of Baylith UOP L of Grace, USA, and the mixture was mixed well. To polymeric MDI (Lupranat M20R) 2% (wt.) of dibenzoyl peroxide was added (calculated on resin component (A)). This mixture was stirred until all peroxide had been dissolved in the MDI. Then the resin component (A), with the additives, and component (B), the polymeric MDI plus additives, were mixed well. This mixture then can be injected in a mould already containing reinforcement material. Injection can either be done via pressure injection or vacuum injection.

All these types of resin sample mixtures, each having sufficiently long pot-life (processing time), can also be used for hand lay-up or spray-up laminates, filament winding and sheet moulding. All these processing techniques can be used to make objects with good (generally improved in comparison to the state of the art objects) mechanical properties.

### Examples 1-7 (and comparative examples A-G)

The results of Examples 1-7 (and comparative examples A-G) are summarized in table I (I.1 and I.2). For preparation of the samples, please see above. Of the Examples, numbers 1-5, and of the Comparative Examples A-C (all based on Daron XP-45-A-2 of DSM Composite Resins; Schaffhausen, Switzerland) are shown in part I.1 of Table I, whereas Examples and Comparative Examples with formulations based on SYNOLITE 1503 (DSM Composite Resins; Schaffhausen, Switzerland) are shown in part I.2 of said table.

**Table I.1**

| Formulations (*) | A | 1 | 2 | 3 | B | C | 4 | 5 |
|---|---|---|---|---|---|---|---|---|
| | | | | | | | | |
| Daron XP 45-A-2 (**) | 100 | 100 | 100 | 100 | 100 | 100 | 100 | 100 |
| | | | | | | | | |
| Lupranate M20R (***) | 0 | 1 | 5 | 10 | 38 | 0 | 1 | 5 |
| | | | | | | | | |
| NCO vs. OH index | 0 | 0,03 | 0,13 | 0,26 | 1,0 | 0 | 0,03 | 0,13 |
| | | | | | | | | |
| Carbon fibre (i) | yes | yes | yes | yes | yes | | | |
| Glass fibre (ii) | | | | | | yes | yes | yes |
| | | | | | | | | |
| Mechanical properties | | | | | | | | |
| | | | | | | | | |
| Flex Str. (MPa) | 1240 | 1420 | 1570 | 1570 | 1560 | 1340 | 1450 | 1630 |
| | | | | | | | | |
| E-modulus (GPa) | 111 | 112 | 115 | 113 | 114 | 52 | 52 | 53 |
| | | | | | | | | |
| ILSS (MPa) | 53 | 65 | 78 | 82 | 83 | 51 | 54 | 58 |
| | | | | | | | | |

| viscosity at 23°C (in mPa.s) | | | | | | | | |
|---|---|---|---|---|---|---|---|---|
| after 0 hr | 255 | 255 | 255 | 255 | 255 | | | |
| after 1 hr | 255 | 255 | 255 | 255 | 255 | | | |
| after 2 hr | 255 | 255 | 265 | 280 | 390 | | | |
| after 3 hr | 255 | 260 | 315 | 360 | 600 | | | |
| after 4 hr | 255 | 275 | 385 | 510 | 1300 | | | |

| | | | | | | | | |
|---|---|---|---|---|---|---|---|---|
| (*) all formulations prepared according to embodiment (b); see text page 9 (**) (A)-component [consisting of (A1a) and (A2)] (***) (B)-component (i) carbon fibre [Panex 3304898 T-13; 48 k]; fibre content 63% (ii) glass fibre [Vetrotex P122; 2400 tex]; fibre content 63% | | | | | | | | |

**Table I.2 (Comparative examples)**

| Formulations (*) | D | 6 | E | F | 7 | G |
|---|---|---|---|---|---|---|
| | | | | | | |
| SYNOLITE 1503 (****) | 100 | 100 | 100 | 100 | 100 | 100 |
| | | | | | | |
| Lupranate M20R (***) | 0 | 5 | 10 | 0 | 5 | 10 |
| | | | | | | |
| NCO vs. OH index | 0 | 0,50 | 1,0 | 0 | 0,50 | 1,0 |
| | | | | | | |
| Carbon fibre^{*)} | yes | yes | yes | | | |
| Glass fibre^{**)} | | | | yes | yes | yes |
| | | | | | | |
| Mechanical properties | | | | | | |
| | | | | | | |
| Flex Str. (MPa) | 900 | 1340 | 1340 | 950 | 1230 | 1370 |
| | | | | | | |
| E-modulus (GPa) | 107 | 112 | 114 | 49 | 51 | 52 |
| | | | | | | |
| ILSS (MPa) | 35 | 60 | 69 | 32 | 42 | 47 |

| | | | | | | |
|---|---|---|---|---|---|---|
| (*) all formulations prepared according to embodiment (b); see text page 9 (****) (A)-component [consisting of unsaturated polyester resin and (A2)] (***) (B)-component (i) carbon fibre [Panex 3304898 T-13; 48 k]; fibre content 63% (ii) glass fibre [Vetrotex P122; 2400 tex]; fibre content 63% | | | | | | |

In these tables I.1 and 1.2 the abbreviations used have the following meaning:
- Flex Str. = flexural strength (in MPa) as determined according to ISO 178;
- E-modulus (in GPa) as determined according to ISO 178;
- ILSS = interlaminar shear strength (in MPa) as determined according to DIN 14130.
- NCO vs. OH index = molar ratio of NCO-functions versus OH-functions (determined as indicated hereinabove)

Comparing the results of the examples and comparative examples clearly shows that flexural strength and ILSS are very much improved in comparison to the situation where no (free) polyisocyanate component is present in the resin system. In particular it can be seen from the table, that values for ILLS and flexural strength of systems with a isocyanate index below 0,5 reach about the same level as systems produced with a isocyanate index equal to 100%. Moreover, as can be seen from the viscosity figures shown for Examples 1-5 and Comparative Examples A and B, the processability of the resin systems according to the invention is much better. Due to the low isocyanate index the viscosity increase remains low, allowing the system to be processed for at least 4 hrs, while the system with an isocyanate index of 100% a viscosity increase more than 400%. This high increase of viscosity will lead to a short pot life and poor fibre wetting.

In particular, it was established that handling properties of the resin systems according to the invention are very good in the claimed range of the molar range of isocyanate groups in the second component (B) versus the hydroxyl groups in the first component (A). In particular, it can be seen that thickening properties are poor at the higher NCO to OH ratios, i.e above 0,55. For results see Table I.1.

In another set of experiments, carried out separately from the examples and comparative examples shown in Table I (please note that the formulations for Example 3 and Comparative Examples A and B are the same as used in Table I; the formulation of Example 8 is only shown in Table II), it has been found that the mechanical properties of the products made from the resin systems according to the invention are capable of retaining their mechanical properties (especially flexural strength and ILSS are strongly improved; the E-modulus remains rather at the same level) at a high level for a substantially longer time than for products made from resin systems falling outside the claimed range of the molar range of isocyanate groups in the second resin component (B) versus the hydroxyl groups in the first resin component (A). This has been demonstrated by subjecting such products to submersion in boiling water for 72 hours. The results are shown in Table II.

**Table II**

| Formulations (*) | A | 3 | 8 | B |
|---|---|---|---|---|
| | | | | |
| Daron XP-45-A-2 (**) | 100 | 100 | 100 | 100 |
| | | | | |
| Lupranate M20R (***) | 0 | 10 | 20 | 30 |
| | | | | |
| NCO vs. OH index | 0 | 0,26 | 0,53 | 1,0 |
| | | | | |
| Carbon fibre (i) | yes | yes | yes | yes |
| | | | | |
| mechanical properties | | | | |
| | | | | |

| Flex Str. (MPa) | | | | |
|---|---|---|---|---|
| Initial | 1250 | 1400 | 1500 | 1415 |
| 72 hours at 100°C | 1075 | 1360 | 1440 | 1500 |
| Retention (percentage) | 86 | 97 | 96 | 106 |

| E-modulus (GPa) | | | | |
|---|---|---|---|---|
| Initial | 98,7 | 98,5 | 97,9 | 99,2 |
| 72 hours at 100°C | 99 | 100 | 100 | 100 |
| Retention (percentage) | 100 | 102 | 102 | 101 |

| ILSS (MPa) | | | | |
|---|---|---|---|---|
| Initial | 65 | 86 | 86 | 86 |
| 72 hours at 100 °C | 51 | 72 | 78 | 79 |
| Retention (percentage) | 78 | 84 | 91 | 92 |

| | | | | |
|---|---|---|---|---|
| (*) all formulations prepared according to embodiment (b); see text page 9 (**) (A)-component [consisting of (A1a) and (A2)] (***) (B)-component (i) carbon fibre [Panex 3304898 T-13; 48 k]; fibre content 63% | | | | |

In a further set of experiments (9-15) and comparative experiments (C and D) it has been demonstrated that the resin systems according to the present invention suitably can be used in one of the main embodiments as shown in the specification (see embodiments (a) and (b), at page 9). The mechanical properties of the products made from each of these embodiments of the resin systems according to the invention are very good, and handling has shown to be easy. For comparison, also state-of-the art resin compositions without hydroxyl groups, without (C) and with (D) isocyanate groups, have been tested. The results are shown in Table III.

**Table III**

| Embodiment (*) | (b) | | | | | (a) | | | Comparison | |
|---|---|---|---|---|---|---|---|---|---|---|
| Formulations | 9 | 10 | 11 | 12 | | 13 | 14 | 15 | C | D |
| Epoxy bisphenol A vinyl ester solid (**) | 100 | 100 | 100 | 100 | | | | | | |
| | | | | | | | | | | |
| Hydroxypropylmeth acrylate (***) | 100 | 100 | 100 | 100 | | 100 | 100 | 100 | | |
| | | | | | | | | | | |
| Diacryl 121® (**) | | | | | | | | | 100 | 100 |
| | | | | | | | | | | |
| Lupranate M20R (***) | | | | | | | | | 0 | 38 |
| | | | | | | | | | | |
| NCO/OH index | 0 | 0,1 | 0,26 | 0,53 | | 0,1 | 0,26 | 1,0 | n.a. | n.a. |
| | | | | | | | | | | |
| Glass fibre content (iii) | 82 | 82 | 82 | 82 | | 83,5 | 83,8 | 83 | 82 | 82 |
| | | | | | | | | | | |
| Mechanical properties | | | | | | | | | | |
| | | | | | | | | | | |
| Flex Str. (MPa) | 1500 | 1880 | 1900 | 1960 | | 1300 | 1350 | 1880 | 1000 | 1050 |
| | | | | | | | | | | |
| E-modulus (GPa) | 50,0 | 51,9 | 52,0 | 52,5 | | 47 | 46 | 49 | 45 | 43 |
| | | | | | | | | | | |
| ILSS (MPa) | 58 | 74 | 76 | 80 | | 55 | 64 | 79 | 33 | 38 |

| | | | | | | | | | | |
|---|---|---|---|---|---|---|---|---|---|---|
| (*) formulations prepared according to embodiment (b) or (a); see text page 9 (**) (A)-component [consisting of (A1a), together with (***), (A2)] (***) used as (A2) together with (A1a) in embodiment (b), respectively used as (A1c) in embodiment (a) (iii) glass fibre [OCF 366-AF-103; 4800 tex]; fibre content 82 wt.% n.a. not available, because no OH-groups present | | | | | | | | | | |

## Claims

1. Fibre-reinforcement material and a peroxide composition containing two-component resin systems, comprising at least a first resin component (A), having a low acid number, containing one or more ethylenically unsaturated groups and one or more isocyanate-reactive groups, and optionally also containing at least one monomer reactive in said first resin component and a second resin component (B), consisting of a polyisocyanate compound having an isocyanate functionality of at least 1,75,
**characterized in that**
• the first and second resin component (A) and (B) are present in unreacted form,
• whereby the first resin component (A) is selected from the group of resin components having one or more ethylenically unsaturated groups and one or more isocyanate-reactive groups, which first resin component is chosen from the group of vinyl ester resins (A1a), and
• the fibre-reinforcement material is provided with isocyanate-reactive sites, and
• the molar ratio of isocyanate groups in the second resin component (B) versus the isocyanate-reactive groups in the first resin component (A) is in the range of from 0,01 to 0,55,

2. Two-component resin system according to claim 1, **characterized in that** the vinyl ester resin (A1a) is dissolved in a monomer (A2) containing one or more ethylenically unsaturated groups and/or one or more isocyanate-reactive groups.

3. Two-component resin system according to claim 2, wherein the monomer (A2) is selected from the group of styrene, methyl methacrylate (MMA), hydroxypropyl methacrylate (HPMA) and hydroxyethyl methacrylate (HEMA), or a mixture thereof.

4. Two-component resin system according to any of the claims 2 to 3 **characterized in that** the weight percentage of (A1)- that is vinyl ester resin (A1a) - is in the range of from 40 to 100% (wt), relative to the total weight of the first component (A) of the resin system. i.e. the total weight of (A1a) and (A2).

5. Two-component resin system according to claim 4, **characterized in that** the weight percentage of resin (A1), is in the range of from 40 to 80% (wt.) relative to the total weight of the first component (A) of the resin system, i.e. the total weight of (A1) and (A2).

6. Two-component resin system according to any of claims 1 to 5, **characterized in that** the polyisocyanate compound of component (B) is selected from the group of compounds and mixtures of compounds from the group of toluene diisocyanate (TDI), isophorone diisocyanate (IPDI), and 4,4'-diphenylmethane diisocyanate (MDI) and mixtures thereof.

7. Two-component resin system according to claim 6, **characterized in that** the polyisocyanate compound has an isocyanate functionality in the range of 1,85 to 3,0, preferably in the range of 1,9 to 2,8.

8. Two-component resin system according to claim 7, **characterized in that** the polyisocyanate compound of component (B) is polymeric MDI.

9. Two-component resin system according to any of claims 1 to 8, **characterized in that** the molar ratio of isocyanate groups in the second component (B) versus the isocyanate-reactive groups in the first component (A) is in the range of 0,02 to 0,50, and preferably in the range of 0,04 to 0,40.

10. Two-component resin system according to any of claims 1 to 9, **characterized in that** the fibre-reinforcement material (D) consists of carbon or glass fibre material.

11. Two-component resin system according to any of claims 1 to 10, **characterized in that** also at least part of the filler material present is provided with isocyanate-reactive sites.

12. Two-component resin system according to any of claims 1 to 11, **characterized in that** the weight percentage of the fibre-reinforcement material (D) is in the range of 5 to 90% (wt.) of the total weight of the resin system, i.e. of the total weight of first resin component (A), second resin component (B), peroxide composition (C), and fibre-reinforcement material (D).

13. Two-component resin system according to any of claims 1 to 12, **characterized in that** the resin system also contains one or more moisture scavengers, in an amount of up to 5% (wt.) of the total weight of the resin system, i.e. of (A) + (B) + (C) + (D).

14. Use of two-component resin systems according to any of claims 1-13 in pultrusion, vacuum injection or filament-winding techniques.

15. Products made by using two-component resin systems according to any of claims 1-13 in a pultrusion, vacuum injection or filament-winding process.

## Patentansprüche

1. Faserverstärktes Material und eine Peroxidzusammensetzung, enthaltend Zwei-Komponenten-Harzsysteme, umfassend mindestens eine erste Harzkomponente (A), mit einer niedrigen Säurezahl, enthaltend eine oder mehrere ethylenisch ungesättigte Gruppen und eine oder mehrere Isocyanat-reaktive Gruppen, und gegebenenfalls enthaltend mindestens ein Monomer, welches in der ersten Harzkomponente reaktiv ist, und eine zweite Harzkomponente (B), die aus einer Polyisocyanatverbindung mit einer Isocyanatfunktionalität von mindestens 1,75 besteht,
**dadurch gekennzeichnet dass**
· die erste und zweite Harzkomponente (A) und (B) in nicht umgesetzter Form vorliegen,
· wobei die erste Harzkomponente (A) aus der Gruppe von Harzkomponenten mit einer oder mehreren ethylenisch ungesättigten Gruppen und einer oder mehreren Isocyanat-reaktiven Gruppen gewählt ist, wobei die erste Harzkomponente aus der Gruppe von Vinylesterharzen (A1a) gewählt ist, und
· das Faserverstärkungsmaterial mit Isocyanat-reaktiven Stellen versehen ist, und
· das Molverhältnis von Isocyanatgruppen in der zweiten Harzkomponente (B) gegenüber den Isocyanat-reaktiven Gruppen in der ersten Harzkomponente (A) im Bereich von 0,01 bis 0,55 liegt.

2. Zwei-Komponenten-Harzsystem gemäß Anspruch 1, **dadurch gekennzeichnet, dass** das Vinylesterharz (A1a) in einem Monomer (A2), welches eine oder mehrere ethylenisch ungesättigte Gruppen und/oder eine oder mehrere Isocyanat-reaktive Gruppen enthält, gelöst ist.

3. Zwei-Komponenten-Harzsystem gemäß Anspruch 2, wobei das Monomer (A2) aus der Gruppe von Styrol, Methylmethacrylat (MMA), Hydroxypropylmethacrylat (HPMA) und Hydroxyethylmethacrylat (HEMA) oder einer Mischung davon gewählt ist.

4. Zwei-Komponenten-Harzsystem gemäß einem beliebigen der Ansprüche 2 bis 3, **dadurch gekennzeichnet, dass** der Gewichtsprozentanteil (A1) - das ist das Vinylesterharz (A1a) - im Bereich von 40 bis 100 % (Gew.) in Bezug auf das Gesamtgewicht der ersten Komponente (A) des Harzsystems, d. h. des Gesamtgewichtes von (A1a) und (A2), liegt.

5. Zwei-Komponenten-Harzsystem gemäß Anspruch 4, **dadurch gekennzeichnet, dass** der Gewichtsprozentanteil vom Harz (A1) im Bereich von 40 bis 80 % (Gew.) in Bezug auf das Gesamtgewicht der ersten Komponente (A) des Harzsystems, d. h. des Gesamtgewichtes von (A1) und (A2), liegt.

6. Zwei-Komponenten-Harzsystem gemäß einem beliebigen der Ansprüche 1 bis 5, **dadurch gekennzeichnet, dass** die Polyisocyanatverbindung der Komponente (B) aus der Gruppe von Verbindungen und Mischungen von Verbindungen der Gruppe von Toluoldiisodyanat (TDI), Isophorondiisocyanat (IPDI) und 4,4'-Diphenylmethandiisocyanat (MDI) und Mischungen davon gewählt ist.

7. Zwei-Komponenten-Harzsystem gemäß Anspruch 6, **dadurch gekennzeichnet, dass** die Polyisocyanatverbindung eine Isocyanatfunktionalität im Bereich von 1,85 bis 3,0, vorzugsweise im Bereich von 1,9 bis 2,8, aufweist.

8. Zwei-Komponenten-Harzsystem gemäß Anspruch 7, **dadurch gekennzeichnet, dass** die Polyisocyanatverbindung der Komponente (B) polymeres MDI ist.

9. Zwei-Komponenten-Harzsystem gemäß einem beliebigen der Ansprüche 1 bis 8, **dadurch gekennzeichnet, dass** das Molverhältnis der Isocyanatgruppen in der zweiten Komponente (B) gegenüber den Isocyanat-reaktiven Gruppen in der ersten Komponente (A) im Bereich von 0,02 bis 0,50 und vorzugsweise im Bereich von 0,04 bis 0,40 liegt.

10. Zwei-Komponenten-Harzsystem gemäß einem beliebigen der Ansprüche 1 bis 9, **dadurch gekennzeichnet, dass** das Faserverstärkungsmaterial (D) aus Kohle- oder Glasfasermaterial besteht.

11. Zwei-Komponenten-Harzsystem gemäß einem beliebigen der Ansprüche 1 bis 10, **dadurch gekennzeichnet, dass** ebenfalls mindestens ein Teil des vorliegenden Füllstoffmaterials mit Isocyanat-reaktiven Stellen versehen ist.

12. Zwei-Komponenten-Harzsystem gemäß einem beliebigen der Ansprüche 1 bis 11, **dadurch gekennzeichnet, dass** der Gewichtsprozentanteil des Faserverstärkungsmaterials (D) im Bereich von 5 bis 90 % (Gew.) des Gesamtgewichtes des Harzsystems, d. h. des Gesamtgewichtes von der ersten Harzkomponente (A), der zweiten Harzkomponente (B), der Peroxidzusammensetzung (C) und des Faserverstärkungsmaterials (D) liegt.

13. Zwei-Komponenten-Harzsystem gemäß einem beliebigen der Ansprüche 1 bis 12, **dadurch gekennzeichnet, dass** das Harzsystem ebenfalls einen oder mehrere Feuchtigkeitsfänger in einer Menge von bis zu 5 % (Gew.) des Gesamtgewichtes des Harzsystems, d. h. von (A) + (B) + (C) + (D), liegt.

14. Verwendung von Zwei-Komponenten-Harzsystemen gemäß einem beliebigen der Ansprüche 1 - 13, in der Pultrusions-, Vakuuminjektions- oder Filamentwickeltechniken.

15. Produkte, die unter Verwendung von Zwei-Komponenten-Harzsystemen gemäß einem beliebigen der Ansprüche 1 - 13 in einem Pultrusions-, Vakuuminjektions- oder Filamentwickelverfahren gemacht werden.

## Revendications

1. Matériau de renforcement fibreux et composition de peroxyde contenant des systèmes de résines à deux composants, comprenant au moins un premier composant résine (A), présentant un faible indice d'acide, renfermant un ou plusieurs groupes éthyléniquement insaturés et un ou plusieurs groupes réactifs vis-à-vis d'un isocyanate, et contenant également, éventuellement, au moins un monomère réactif dans ledit premier composant résine, et un deuxième composant résine (B), constitué d'un composé polyisocyanate présentant une fonctionnalité isocyanate d'au moins 1,75,
**caractérisé en ce que** :
• les premier et deuxième composants résine (A) et (B) sont présents sous une forme n'ayant pas réagi,
• où le premier composant résine (A) est choisi parmi le groupe de composants résine renfermant un ou plusieurs groupes éthyléniquement insaturés et un ou plusieurs groupes réactifs vis-à-vis d'un isocyanate, ledit premier composant résine étant choisi parmi le groupe de résines d'ester vinylique (A1a),
• le matériau de renforcement fibreux est pourvu de sites réactifs vis-à-vis d'un isocyanate, et
• le rapport molaire entre les groupes isocyanate dans le deuxième composant résine (B) et les groupes réactifs vis-à-vis d'un isocyanate dans le premier composant résine (A) est dans la plage de 0,01 à 0,55.

2. Système de résine à deux composants selon la revendication 1, **caractérisé en ce que** la résine d'ester vinylique (A1a) est dissoute dans un monomère (A2) renfermant un ou plusieurs groupes éthyléniquement insaturés et/ou groupes réactifs vis-à-vis d'un isocyanate.

3. Système de résine à deux composants selon la revendication 2, dans lequel le monomère (A2) est choisi parmi le groupe constitué du styrène, du méthacrylate de méthyle (MMA), du méthacrylate d'hydroxypropyle (HPMA) et du méthacrylate d'hydroxyéthyle (HEMA), ou d'un mélange de ceux-ci.

4. Système de résine à deux composants selon l'une quelconque des revendications 2 à 3, **caractérisé en ce que** le pourcentage pondéral de (A1) - c'est-à-dire de la résine d'ester vinylique (A1a) - est dans la plage de 40 à 100 % (en poids), par rapport au poids total du premier composant (A) du système de résine, c'est-à-dire au poids total de (A1a) et (A2).

5. Système de résine à deux composants selon la revendication 4, **caractérisé en ce que** le pourcentage pondéral de la résine (A1) est dans la plage de 40 à 80 % (en poids), par rapport au poids total du premier composant (A) du système de résine, c'est-à-dire au poids total de (A1) et (A2).

6. Système de résine à deux composants selon l'une quelconque des revendications 1 à 5, **caractérisé en ce que** le composé polyisocyanate du composant (B) est choisi parmi le groupe de composés et de mélanges de composés du groupe constitué du diisocyanate de toluène (TDI), du diisocyanate d'isophorone (IPDI) et du diisocyanate de 4,4'-diphénylméthane (MDI) et de leurs mélanges.

7. Système de résine à deux composants selon la revendication 6, **caractérisé en ce que** le composé polyisocyanate présente une fonctionnalité isocyanate dans la plage de 1,85 à 3,0, de préférence, dans la plage de 1,9 à 2,8.

8. Système de résine à deux composants selon la revendication 7, **caractérisé en ce que** le composé polyisocyanate du composant (B) est le MDI polymère.

9. Système de résine à deux composants selon l'une quelconque des revendications 1 à 8, **caractérisé en ce que** le rapport molaire entre les groupes isocyanate dans le deuxième composant (B) et les groupes réactifs vis-à-vis d'un isocyanate dans le premier composant (A) est dans la plage de 0,02 à 0,50 et, de préférence, dans la plage de 0,04 à 0,40.

10. Système de résine à deux composants selon l'une quelconque des revendications 1 à 9, **caractérisé en ce que** le matériau de renforcement fibreux (D) est constitué d'un matériau à fibres de carbone ou de verre.

11. Système de résine à deux composants selon l'une quelconque des revendications 1 à 10, **caractérisé en ce qu'**au moins une partie du matériau de charge est également pourvue de sites réactifs vis-à-vis d'un isocyanate.

12. Système de résine à deux composants selon l'une quelconque des revendications 1 à 11, **caractérisé en ce que** le pourcentage pondéral du matériau de renforcement fibreux (D) est dans la plage de 5 à 90 % (en poids) du poids total du système de résine, c'est-à-dire du poids total du premier composant résine (A), du deuxième composant résine (B), de la composition de peroxyde (C) et du matériau de renforcement fibreux (D).

13. Système de résine à deux composants selon l'une quelconque des revendications 1 à 12, **caractérisé en ce que** le système de résine contient également un ou plusieurs capteurs d'humidité, en une quantité allant jusqu'à 5% (en poids) du poids total du système de résine, c'est-à-dire de (A) + (B) + (C) + (D).

14. Utilisation de systèmes de résines à deux composants selon l'une quelconque des revendications 1 à 13, dans des techniques de pultrusion, d'injection sous vide ou d'enroulement de filaments.

15. Produits fabriqués en utilisant des systèmes de résines à deux composants selon l'une quelconque des revendications 1 à 13, dans un procédé de pultrusion, d'injection sous vide ou d'enroulement de filaments.
